# EUROPEAN PATENT SPECIFICATION

(11) **EP 4 123 226 B1**
(45) Date of publication and mention of the grant of the patent: **22.11.2023**
(21) Application number: 22185646.1
(22) Date of filing: 19.07.2022
(51) Int. Cl.: F24D 5/00, F24D 5/02, F24D 11/00, F24F 5/00, F24S 20/67, F28C 3/06, F28D 20/00, F24S 60/30

(54) **SYSTEM FOR HEATING A BUILDING**
SYSTEM ZUM HEIZEN EINES GEBÄUDES
SYSTÈME DE CHAUFFAGE D'UN BÂTIMENT

(30) Priority: 19.07.2021 SE 2150960
(43) Date of publication of application: 25.01.2023
(73) Proprietor: Gennow, Bo, 182 02 Danderyd (SE)
(72) Inventor: Gennow, Bo, 182 02 Danderyd (SE)
(74) Representative: Ehrner & Delmar Patentbyrå AB

(56) References cited:
- JP-A- S53 121 240
- JP-A- 2014 013 133
- NO-B- 149 084
- US-A- 4 270 519
- US-B1- 7 549 418

## Description

The present invention relates to a system for heating a building according to the appended claims.

### Background

There are a number of well-known methods for heating a building. Examples of heating methods are district heating, wood and pellets, solar energy, electric heating, gas, and various variants of heat pumps.

All the mentioned methods have their advantages and disadvantages. Generally, it is desirable to provide reliable heating at a low price that is gentle on the environment.

Document US 4 270 519 A discloses a system for heating a building according to the preamble of claim 1.

### Summary

An object of the present invention is to provide a heating system for buildings which exhibits advantages over prior art. This can, for example, refer to cost aspects, environmental aspects, scalability, installation aspects, etc.

The above purpose is achieved with a system for heating a according to claim 1.

An advantage of a system for heating a building according to the invention is that it utilizes existing solar heated air in the building, which means minimal cost. Another advantage is that temperature differences in the building can be evened out and that this can happen over time as the water heated in the water container acts as an energy storage. This leads to a pleasant indoor climate and on-demand heating due to the energy storing effect. An additional advantage is the high energy exchange between the solar heated air and the water as microbubbles are used by means of air membranes for heating the water. The present system is a very cost-effective and environmentally friendly solution.

Embodiments of the system above can be found in the appended dependent claims depending on claim 1.

Further advantages and embodiments of the invention will become apparent from the following detailed description.

### Brief description of the figures

The following figures are intended to show embodiments of the invention in which:
Figure 1 shows an embodiment of the invention;
Figure 2 shows an embodiment of the invention comprising a second fan and a second air membrane; and
Figure 3 shows a further embodiment of the invention including a heating element.

### Detailed description of the invention

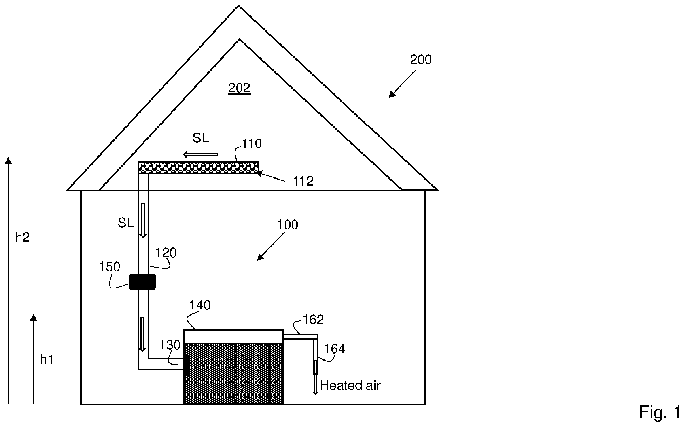

Figure 1 shows an embodiment of a system 100 for heating a building 200 according to the invention, where the arrows indicate the flow direction of the air in the different parts of the system. The system 100 shown in Figure 1 comprises a first inlet pipe 110 located at a ceiling 202 of the building 200. The system 100 further comprises a first outlet pipe 120 comprising a first part 122 which is connected to the first inlet pipe 110 and a second part 124 connected to a first air membrane 130. Furthermore, a water container 140 is shown to which the first air membrane 130 is connected. A first fan 150 is connected to the first inlet pipe 110 and/or the first outlet pipe 120 depending on the design of the system 100.

The first fan 150 is arranged to, in operation, draw solar heated air SL in the ceiling of the building in through the first inlet pipe 110 and blow the solar heated air through the first air membrane 130 into the water container 140 so that micro-air bubbles of solar heated air are formed or pushed into the water container 140.

Thus, the water in the water container will be heated by the solar heated air in the form of microbubbles in the water container as the temperature of the water before heating is the same as the temperature in the room in which the water container 140 is located. To heat the building 200, the system 100 further comprises a second outlet pipe 160 comprising a first part 162 connected to an upper part 142 of the water container 140 for receiving heated air from the water container 140 and a second part 164 located at or in a room of the building 200 for supplying the heated air from the water container 140 into the room/building. The second outlet pipe 160 may be connected to a condensation separator (not shown in the figures) if this would be necessary.

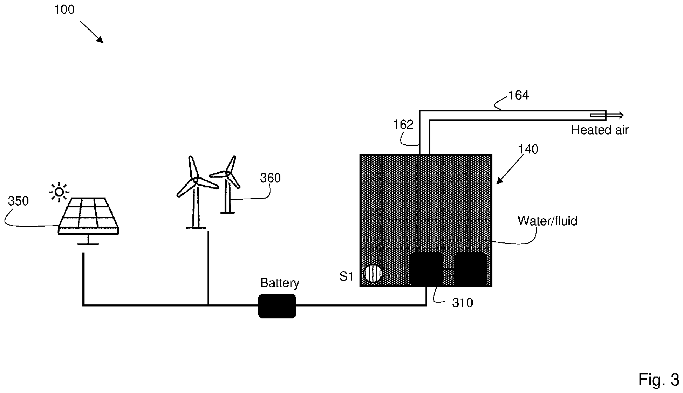

The upper part of the water container 140 is not filled with water in the example shown in Figure 1. In an alternative embodiment shown in Figure 3, the water container 140 may be completely filled with water and a pipe may be arranged on top of the water container 140 from which the air is taken from the water container 140 for heating the room. For improved or increased flow of heated air from the water container into the room, an additional fan may be arranged at the second outlet pipe 160 to, in operation, draw heated air from the water container and blow the heated air into the room. However, this embodiment is not shown in the figures.

It is noted from Figure 1 that the first inlet pipe 110 may comprise a plurality of openings 112 along the extension of the inlet pipe 110 for intake of solar heated air from the ceiling. Thereby, improving and increasing the inflow of solar heated air from the ceiling into the inlet pipe 110. The size and number of the openings may be varied and depend on the desired flow into the inlet pipe 110 and thus into the water container 140.

It is further noted that the water container 140 is located vertically below the first inlet pipe 110 in the building, i.e., under the ceiling 202 of the building. As shown in Figure 1, the first inlet pipe 110 is located at a height h2 and the water container h1, where h2 > h1. The height h2 refers to the height at a ceiling in the building where solar heated air accumulates during days when the sun heats the air in the ceiling. The height h1 instead refers to the vertical location of the water container 140 in the building 200 and may e.g., be a floor under the ceiling, a ground floor or a basement.

The volume of the water container 140 may be varied depending on the application. In a non-limiting example, the volume is 1 cubic meter or greater. Said volume is e.g., a function of the amount of solar heated air, the temperature of solar heated air and the volume of the room/building to be heated. The volume of water defines the amount of energy from the solar heated air that can be stored. The water in the water container 140 may also be mixed with various chemicals for improved energy storage. In addition, the water container may be replaced with another container in which there is a fluid other than water for energy storage. If toxic substances are formed, these must of course be purified.

The air membranes in the system 100 may be of a conventional type intended to receive air and blow microbubbles of air into water. The air membrane is further designed in such a way that water does not penetrate into the air pipe and hence also functions as a non-return valve. The diameter of the microbubbles may for example be between 0.5 - 0.8 mm. The fans may be electrically powered and controllable and include control devices, such as electromechanical actuators, communication interfaces and other components for wireless and/or wired communication.

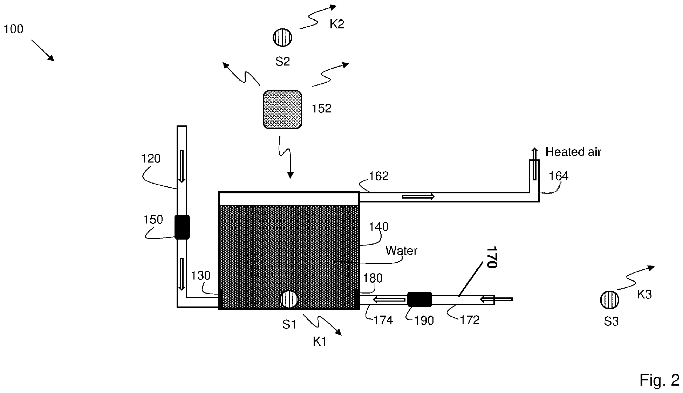

Figure 2 shows a further embodiment of the invention comprising a second fan, a second air membrane and a number of sensors S1, S2, S3 which can provide information about temperatures, the light flow outdoors, wind conditions, etc. Said sensors can be wirelessly and/or wired connected K1, K2, K3 to a control unit 152, such as a processor with associated components, via a suitable communication system. The control unit 152 may for example execute a program for controlling the present system 100 such as the fans of the system, etc. The sensors S1, S2, S3 provide information about the temperature of the water, the temperature of the solar heated air, the temperature of the air in the room, outdoor temperature, etc. Based on this data, the control system may control the fans and other units/components in the system. The fans of the system may hence be controlled for more efficient heating and lower operating costs. The fans may partly be controlled in a pure off or on mode corresponding to a non-operating mode or an operating mode of the fan. Furthermore, the fans may, in operation, be controlled in different power modes corresponding to different air flows for further improved and refined heating of the building.

Thus, according to an embodiment of the invention, the first fan 150 is arranged to draw in solar heated air through the first inlet pipe 110 and blow the solar heated air through the first air membrane 130 into the water container 140 if the temperature of the solar heated air is higher than the temperature of the water in the water container 140. Thereby, reducing the operating cost.

For improved effect, the system 100 as shown in Figure 2 comprises a second inlet pipe 170 comprising a first part 172 located in the building 200 and a second part 174 which is connected to a second air membrane 180 which is connected to the water container 140. In addition, a second fan 190 is included which is connected to the second inlet pipe 170. The second fan 190 is arranged to, in operation, draw in air from the building 200 through the first part 172 and blow the air through the second air membrane 180 into the water container 140 for forming micro-air bubbles of air from the building 200 in the water container 140.

According to an embodiment of the invention the second fan 190 is arranged to draw in air from the building 200 through the first part 172 and blow the air through the second air membrane 180 into the water container 140 if the temperature of the air in the room is lower than the temperature of the water in the water container 140.

According to a further embodiment of the invention the second fan 190 is arranged to draw in air from the building 200 through the first part 172 and blow the air through the second air membrane 180 into the water container 140 if the temperature of the water in the water container is higher than a threshold value, for example 25, 30 or 35 degrees Celsius. This threshold value may be a function of an existing indoor temperature and/or a desired indoor temperature.

Said first 150 and second fan 190 may further be controlled so that their flow effect is a function of the above-mentioned temperatures and threshold values.

Figure 3 shows a further embodiment of the invention comprising one or more heating elements 310 located in the water container for heating the water in the water container when needed. It is noted that most of the other components shown in Figures 1 and 2 are not shown in Figure 3, but these may of course be combined with those shown in Figure 3. These heating elements 310 are arranged to, in operation, heat the water in the water container 140 if the temperature of the solar heated air is lower than the temperature of the water in the water container 140. Thus, an alternative heat generator is provided in the event that the air in the ceiling does not maintain a sufficiently high temperature or the energy effect is not sufficient.

As shown in Figure 3, the present system may further include a solar power plant 350 and/or a wind power plant 360 which are arranged to drive the heating elements 310 for environmentally friendly and economically advantageous operation. The solar power plant 350 and the wind power plant 360 may be connected to a battery for intermediate storage of energy. The heating elements, the solar power plant 350, the wind power plant 360, and the battery may also be controlled by the control system 152 of the system for optimal performance.

Finally, it should be understood that the present invention is not limited to the embodiments described above but includes and refers to all embodiments within the scope of protection of the independent claim.

## Claims

1. System (100) for heating a building (200), wherein the system (100) comprises:
a building (200);
a first inlet pipe (110) located at a ceiling (202) of the building (200);
a first outlet pipe (120) comprising a first part (122) connected to the first inlet pipe (110) and a second part (124) connected to a first air membrane (130);
a water container (140) to which the first air membrane (130) is connected;
a first fan (150) connected to the first inlet pipe (110) or the first outlet pipe (120), wherein the first fan (150) is arranged to, in operation, draw solar heated air (SL) through the first inlet pipe (110) and blow the solar heated air (SL) through the first air membrane (130) into the water container (140) for forming micro-air bubbles of solar heated air (SL) in the water container (140);
a second outlet pipe (160) comprising a first part (162) connected to an upper part (142) of the water container (140) for receiving heated air from the water container (140) and a second part (164) located at, or in a room in the building (200) for supplying the heated air from the water container (140) into the room; **characterized in that** comprising:
a second inlet pipe (170) comprising a first part (172) located in the building (200) and a second part (174) connected to a second air membrane (180) which is connected to the water container (140); and
a second fan (190) connected to the second inlet pipe (170), wherein the second fan (190) is arranged to, in operation, draw air from the building (200) through the first part (172) and blow the air through the second air membrane (180) into the water container (140) for forming micro-air bubbles of air from the building (200) in the water container (140).

2. System (100) according to claim 1, wherein the first fan (150) is arranged to draw solar heated air (SL) through the first inlet pipe (110) and blow the solar heated air (SL) through the first air membrane (130) into the water container (140) if the temperature of the solar heated air (SL) is higher than the temperature of the water in the water container (140).

3. System (100) according to claim 1 or 2, wherein the first inlet pipe (110) comprises a plurality of openings (112) along the extension of the inlet pipe (110) for intake of solar heated air.

4. System (100) according to anyone of the preceding claims, wherein the water container (140) is located vertically below the first inlet pipe (110).

5. System (100) according to anyone of the preceding claims, wherein the second fan (190) is arranged to draw air from the building (200) through the first part (172) and blow the air through the second air membrane (180) into the water container (140) if the temperature of the air in the room is lower than the temperature of the water in the water container (140).

6. System (100) according to claim 5, wherein the second fan (190) is arranged to draw air from the building (200) through the first part (172) and blow the air through the second air membrane (180) into the water container (140) if the temperature of the water in the water container is higher than a threshold value.

7. System (100) according to anyone of the preceding claims, further comprising a heating element (310) located in the water container (140), wherein the heating element (310), in operation, is arranged to heat the water in the water container (140) if the temperature of the solar heated air (SL) is lower than the temperature of the water in the water container (140).

8. System (100) according to claim 7, comprising a solar power plant (350) and/or a wind power plant (360) and wherein the heating element (310) is powered by the solar power plant (350) and/or the wind power plant (360).

## Patentansprüche

1. System (100) zum Heizen eines Gebäudes (200), wobei das System (100) umfasst:
ein Gebäude (200);
ein erstes Einlassrohr (110), das sich an einer Decke (202) des Gebäudes (200) befindet;
ein erstes Auslassrohr (120) mit einem ersten Teil (122), der mit dem ersten Einlassrohr (110) verbunden ist, und einem zweiten Teil (124), der mit einer ersten Luftmembran (130) verbunden ist;
einen Wasserbehälter (140), mit dem die erste Luftmembran (130) verbunden ist;
ein erstes Gebläse (150), das mit dem ersten Einlassrohr (110) oder dem ersten Auslassrohr (120) verbunden ist, wobei das erste Gebläse (150) so angeordnet ist, dass es im Betrieb solarerwärmte Luft (SL) durch das erste Einlassrohr (110) ansaugt und die solarerwärmte Luft (SL) durch die erste Luftmembran (130) in den Wasserbehälter (140) bläst, um in dem Wasserbehälter (140) Mikroluftblasen aus solarerwärmter Luft (SL) zu bilden;
ein zweites Auslassrohr (160) mit einem ersten Teil (162), der mit einem oberen Teil (142) des Wasserbehälters (140) verbunden ist, um erwärmte Luft aus dem Wasserbehälter (140) aufzunehmen, und einem zweiten Teil (164), der sich an oder in einem Raum in dem Gebäude (200) befindet, um die erwärmte Luft aus dem Wasserbehälter (140) in den Raum zu leiten; **dadurch gekennzeichnet, dass** es umfasst:
ein zweites Einlassrohr (170) mit einem ersten Teil (172), der sich in dem Gebäude (200) befindet, und einem zweiten Teil (174), der mit einer zweiten Luftmembran (180) verbunden ist, die mit dem Wasserbehälter (140) verbunden ist; und
ein zweites Gebläse (190), das mit dem zweiten Einlassrohr (170) verbunden ist, wobei das zweite Gebläse (190) so angeordnet ist, dass es im Betrieb Luft aus dem Gebäude (200) durch den ersten Teil (172) ansaugt und die Luft durch die zweite Luftmembran (180) in den Wasserbehälter (140) bläst, um aus Luft aus dem Gebäude (200) Mikroluftblasen in dem Wasserbehälter (140) zu bilden.

2. System (100) gemäß Anspruch 1, wobei das erste Gebläse (150) so angeordnet ist, dass es solarerwärmte Luft (SL) durch das erste Einlassrohr (110) ansaugt und die solarerwärmte Luft (SL) durch die erste Luftmembran (130) in den Wasserbehälter (140) bläst, wenn die Temperatur der solarerwärmten Luft (SL) höher als die Temperatur des Wassers in dem Wasserbehälter (140) ist.

3. System (100) gemäß Anspruch 1 oder 2, wobei das erste Einlassrohr (110) eine Vielzahl von Öffnungen (112) entlang der Erstreckung des Einlassrohrs (110) zum Ansaugen von solarerwärmter Luft umfasst.

4. System (100) gemäß einem der vorhergehenden Ansprüche, wobei der Wasserbehälter (140) vertikal unter dem ersten Einlassrohr (110) angeordnet ist.

5. System (100) gemäß einem der vorhergehenden Ansprüche, wobei das zweite Gebläse (190) so angeordnet ist, dass es Luft aus dem Gebäude (200) durch den ersten Teil (172) ansaugt und die Luft durch die zweite Luftmembran (180) in den Wasserbehälter (140) bläst, wenn die Temperatur der Luft in dem Raum niedriger als die Temperatur des Wassers in dem Wasserbehälter (140) ist.

6. System (100) gemäß Anspruch 5, wobei das zweite Gebläse (190) so angeordnet ist, dass es Luft aus dem Gebäude (200) durch den ersten Teil (172) ansaugt und die Luft durch die zweite Luftmembran (180) in den Wasserbehälter (140) bläst, wenn die Temperatur des Wassers im Wasserbehälter höher als ein Schwellenwert ist.

7. System (100) gemäß einem der vorhergehenden Ansprüche, ferner umfassend ein Heizelement (310), das in dem Wasserbehälter (140) angeordnet ist, wobei das Heizelement (310) im Betrieb so angeordnet ist, dass es das Wasser in dem Wasserbehälter (140) erwärmt, wenn die Temperatur der solarerwärmten Luft (SL) niedriger als die Temperatur des Wassers in dem Wasserbehälter (140) ist.

8. System (100) gemäß Anspruch 7, umfassend ein Solarkraftwerk (350) und/oder ein Windkraftwerk (360), und wobei das Heizelement (310) durch das Solarkraftwerk (350) und/oder das Windkraftwerk (360) mit Energie versorgt wird.

## Revendications

1. Système (100) destiné à chauffer un bâtiment (200), dans lequel le système (100) comprend :
un bâtiment (200) ;
une première canalisation d'entrée (110) située au niveau d'un plafond (202) du bâtiment (200) ;
une première canalisation de sortie (120) comprenant une première partie (122) raccordée à la première canalisation d'entrée (110) et une seconde partie (124) raccordée à une première membrane pneumatique (130) ;
un réservoir d'eau (140) auquel la première membrane pneumatique (130) est raccordée ;
un premier ventilateur (150) raccordé à la première canalisation d'entrée (110) ou à la première canalisation de sortie (120), dans lequel le premier ventilateur (150) est conçu pour, en fonctionnement, tirer de l'air chauffé par le soleil (SL) à travers a première canalisation d'entrée (110) et souffler l'air chauffé par le soleil (SL) à travers la première membrane pneumatique (130) dans le réservoir d'eau (140) pour former des micro bulles d'air de l'air chauffé par le soleil (SL) dans le réservoir d'eau (140) ;
une seconde canalisation de sortie (160) comprenant une première partie (162) raccordée à une partie supérieure (142) du réservoir d'eau (140) pour recevoir de l'air chauffé depuis le réservoir d'eau (140) et une seconde partie (164) située au niveau de ou dans une pièce du bâtiment (200) pour introduire l'air chauffé depuis le réservoir d'eau (140) dans la pièce ; **caractérisé en ce qu'**il comprend :
une seconde canalisation d'entrée (170) comprenant une première partie (172) située dans le bâtiment (200) et une seconde partie (174) raccordée à une seconde membrane pneumatique (180) qui est raccordée au réservoir d'eau (140) ; et
un second ventilateur (190) raccordé à la seconde canalisation d'entrée (170), dans lequel le second ventilateur (190) est conçu pour, en fonctionnement, tirer de l'air depuis le bâtiment (200) à travers la première partie (172) et souffler l'air à travers la seconde membrane pneumatique (180) dans le réservoir d'eau (140) pour former des micro bulles d'air depuis le bâtiment (200) dans le réservoir d'eau (140).

2. Système (100) selon la revendication 1, dans lequel le premier ventilateur (150) est conçu pour tirer l'air chauffé par le soleil (SL) à travers la première canalisation d'entrée (110) et souffler l'air chauffé par le soleil (SL) à travers la première membrane pneumatique (130) dans le réservoir d'eau (140) si la température de l'air chauffé par le soleil (SL) est supérieure à la température de l'eau dans le réservoir d'eau (140).

3. Système (100) selon la revendication 1 ou 2, dans lequel la première canalisation d'entrée (110) comprend une pluralité d'ouvertures (112) le long de l'extension de la canalisation d'entrée (110) pour l'admission de l'air chauffé par le soleil.

4. Système (100) selon l'une quelconque des revendications précédentes, dans lequel le réservoir d'eau (140) est situé verticalement sous la première canalisation d'entrée (110).

5. Système (100) selon l'une quelconque des revendications précédentes, dans lequel le second ventilateur (190) est conçu pour tirer l'air depuis le bâtiment (200) à travers la première partie (172) et souffler l'air à travers la seconde membrane pneumatique (180) dans le réservoir d'eau (140) si la température de l'air dans la pièce est inférieure à la température de l'eau dans le réservoir d'eau (140).

6. Système (100) selon la revendication 5, dans lequel le second ventilateur (190) est conçu pour tirer l'air depuis le bâtiment (200) à travers la première partie (172) et souffler l'air à travers la seconde membrane pneumatique (180) dans le réservoir d'eau (140) si la température de l'eau dans le réservoir d'eau est supérieure à une valeur seuil.

7. Système (100) selon l'une quelconque des revendications précédentes, comprenant en outre un élément chauffant (310) situé dans le réservoir d'eau (140), dans lequel l'élément chauffant (310), en fonctionnement, est conçu pour chauffer l'eau dans le réservoir d'eau (140) si la température de l'air chauffé par le soleil (SL) est inférieure à la température de l'eau dans le réservoir d'eau (140).

8. Système (100) selon la revendication 7, comprenant une centrale solaire (350) et/ou une centrale éolienne (360) et dans lequel l'élément chauffant (310) est alimenté par la centrale solaire (350) et/ou la centrale éolienne (360) .
